# EUROPÄISCHE PATENTANMELDUNG

(11) **EP 1 174 979 A1**
(43) Veröffentlichungstag der Anmeldung: **23.01.2002**
(21) Anmeldenummer: 00810640.3
(22) Anmeldetag: 19.07.2000
(51) Int. Cl.: H02K 1/20, H02K 9/02

(54) **Stator zur Rotor/Stator-Spaltkühlung und Verfahren zur Kühlung eines in einem Stator rotierenden Rotors**

(71) Anmelder: ABB Industrie AG, 5400 Baden (CH)
(72) Erfinder: Hirsch, Christoph, DE-85386 Eching (DE); von Wolfersdorf, Jens, DE-71088 Holzerlingen (DE); Jakoby, Ralf, CH-5224 Unterbözberg (CH)
(74) Vertreter: ABB Patent Attorneys

(57) **Zusammenfassung**

Die vorliegende Erfindung offenbart eine elektrische Maschine mit einem Stator (1) mit einer zentralen Öffnung, in welcher der Rotor (2) der Maschine gelagert ist und mit mehreren am Umfang der zentralen Öffnung des Stators (1) angeordneten radialen Vertiefungen (5,6), welche sich in axialer Richtung im wesentlichen über die Länge des Rotor/Stator-Spalts (7) erstrecken und welche in Umfangsrichtung gesehen jeweils abwechselnd axiale Zuführungs- (5) und Abführungskanäle (6) für Kühlluft bilden. Die Zuführungskanäle (5) sind separat von den Abführungskanälen (6) mit Kühlluft beaufschlagbar, weshalb sich beim Einspeisen von Kühlluft mit einem Überdruck in die Zuführungskanäle (5) eine Kühlluftströmung im Rotor/Stator-Spalt (7) in Umfangsrichtung von den Zuführungskanälen (5) zu den jeweils direkt neben diesen angeordneten Abführungskanälen (6) ausbildet. Hierdurch lässt sich die Kühlung der an den Rotor/Stator-Spalt (7) angrenzenden Bauteilflächen des Rotors (2) und Stators (1) deutlich verbessern sowie in diesen Bereichen eine gleichmässigere Temperaturverteilung in axialer Richtung erzielen.

## Beschreibung

### Technisches Gebiet

Die vorliegende Erfindung betrifft einen Stator, ein Magnetlager, eine Kraft- und/oder Arbeitsmaschine sowie ein Verfahren zur Kühlung eines Rotors gemäss den Oberbegriffen der unabhängigen Patentansprüche.

### Stand der Technik

Bei rotatorischen elektrischen Maschinen, z.B. Elektromotoren und Generatoren, oder bei spezifischen Baugruppen derselben, z.B. elektrische Magnetlagerungen, ist es erforderlich, die durch elektrische Verluste im Rotor und Stator entstehende Wärme abzuführen, damit zulässige Bauteiltemperaturen und Toleranzen eingehalten werden können. Bei bestimmten Bauarten ist es üblich, Wärme dadurch abzuführen, dass im Rotor/Stator-Spalt in axialer Richtung eine Kühlluftströmung erzeugt wird. Da dieser Spalt in der Regel einen geringen Querschnitt aufweist und die zur Verfügung stehenden Kühlmedium-Speisedrücke in den meisten Fällen relativ gering sind, sind die erzielbaren Kühlleistungen unbefriedigend. Zudem sind die hierdurch sich ergebenden Bauteiltemperaturen über die axiale Erstreckung des Rotor/Stator-Spalts gesehen ungleichmässig, was aus betriebstechnischer Sicht wenig wünschenswert ist.

### Darstellung der Erfindung

Es stellt sich daher die Aufgabe einen Stator zur Rotor/Stator-Spaltkühlung und ein Verfahren zur Kühlung eines in einem Stator rotierenden Rotors zur Verfügung zu stellen, welche die zuvor genannten Nachteile des Standes der Technik nicht aufweisen.

Diese Aufgabe wird vom dem Stator und dem Verfahren gemäss den unabhängigen Ansprüchen gelöst.

Demgemäss weist der Stator eine zentrale, sich axial in diesen hinein erstreckende Öffnung von im wesentlichen kreisrundem Querschnitt auf, in der ein Rotor unter Bildung eines kreisringförmigen Rotor/Stator-Spaltes angeordnet werden kann. Am Umfang der zentralen Öffnung sind mehrere radiale Vertiefungen angeordnet, welche sich in axialer Richtung mindestens teilweise über die axiale Erstreckung der zentralen Öffnung erstrecken und von welchen einige oder alle Strömungskanäle bilden, die der Zu- oder Abführung eines Kühlmediums (z.B. Kühlluft) dienen. Die ein Kühlmedium transportierenden Kanäle sind dabei derartig im Stator angeordnet, dass der oder die als Zuführungskanäle dienenden Kanäle in Umfangsrichtung der zentralen Öffnung gesehen auf einer oder auf beiden ihrer Seiten, direkt neben diesen angeordnet, einen als Abführungskanal für Kühlmedium dienenden Kanal aufweisen. Direkt neben diesen angeordnet bedeutet, dass in Umfangsrichtung gesehen keine weiteren Öffnungen, wie z.B. Bohrungen, zwischen dem Zuführungskanal und dem Abführungskanal angeordnet sind, welche einer Zu- oder Abfuhr von Kühlmedium dienen. Zudem ist der Stator derartig ausgestaltet, dass der oder die Zuführungskanäle jeweils separat von dem oder den direkt neben diesem angeordneten Abführungskanälen mit einem Kühlmedium beaufschlagbar sind um eine Kühlmittelströmung im Rotor/Stator-Spalt in Umfangsrichtung vom Zuführungskanal zum Abführungskanal zu erzeugen. Es hat sich gezeigt, dass hierdurch eine deutliche Verbesserung der Kühlleistung und eine in axialer Richtung homogene Bauteiltemperatur über die Länge des Rotor/Stator-Spalts erzielt werden kann.

In einer bevorzugten Ausführung wechseln sich die Zuführungskanäle und die Abführungskanäle in Umfangsrichtung der zentralen Öffnung gesehen jeweils ab, wodurch die in Umfangsrichtung gesehen nicht zur Kühlung nutzbaren Bereiche des Rotor/Stator-Spaltes zumindest bei Maschinen mit einer festen Drehrichtung äusserst klein gehalten werden können.

Wenn die Zuführungskanäle so dimensioniert werden, dass sich ihr Querschnitt axial in Strömungsrichtung gesehen verkleinert, kann auch bei kleinen Kanalquerschnitten bzw. grossen Kanallängen ein im wesentlichen konstanter Totaldruck über die gesamte axiale Erstreckung des jeweiligen Zuführungskanals erzielt werden. Das gleiche gilt umgekehrt für die Abführungskanäle, welche zur Erzielung eines konstanten Totaldrucks über ihre axiale Erstreckung derart ausgestaltet sein können, dass sich ihr Querschnitt axial in Strömungsrichtung gesehen erweitert. Werden sowohl der Zuführungskanal als auch der oder die dazugehörigen Abführungskanäle auf diese Weise ausgestaltet, so ergeben sich über die gesamte gemeinsame axiale Erstreckung derselben etwa gleiche Druckdifferenzen über den zwischen diesen befindlichen Teil des Rotor/Stator-Spalts, was zu gleichmässigen Strömungsverhältnissen und damit zu einer in axialer Richtung gesehen gleichmässigen Kühlung der angrenzenden Bauteile führt.

Bevorzugterweise sind einige oder alle der Zuführungskanäle und/oder der Abführungskanäle an einem oder an beiden Enden im Bereich des Rotor/Stator-Spalts axial verschlossen, so dass das Zuführen bzw. Abführen von Kühlmedium zu den Kanälen bzw. von den Kanälen weg axial jeweils von einer Seite her oder auch radial erfolgen kann. In einer bevorzugten Ausführung sind die Zuführungskanäle axial an genau einem Ende verschlossen und die dazugehörigen Abführungskanäle an ihrem entgegengesetzten Ende. Dieses ergibt den Vorteil, dass ein axiales Einspeisen von Kühlmedium auf der einen Seite und ein axiales Abströmen des erwärmten Kühlmediums auf der anderen Seite des Stators möglich ist, was speziell bei der Kühlung endseitig angeordneter Magnetlager bei Maschinen, in deren Innenraum ein Überdruck erzeugt wird, einfache konstruktive Lösungen ermöglicht. Wird bei einer solchen Maschine das Lager derartig angeordnet, dass es als Trennelement zwischen Innenraum und Umgebung wirkt, so erfolgt eine axiale Einspeisung von Kühlmedium (z.B. Kühlluft) in die Zuführungskanäle vom Innenraum her und ein Abströmen des erwärmten Kühlmediums von den Abführungskanälen axial nach aussen hin.

Der erfindungsgemässe Stator eignet sich besonders für die Verwendung in einem gasgekühlten Elektromotor oder Generator oder in einer gasgekühlten elektrischen Maschine, welche je nach Wunsch als Motor oder Generator betrieben werden kann. Das Kühlgas kann dabei in einem geschlossenen Kreislauf mit Wärmetauschern umlaufen (z.B. ein geschlossener Wasserstoffkreislauf) oder aus der Umgebung (Luft) angesaugt und an die Umgebung abgegeben werden, wobei die Förderung des Kühlmediums durch Eigenventilation oder durch interne oder externe Kühlmediumpumpen erfolgen kann.

Ein weiterer Aspekt der Erfindung betrifft ein Verfahren zur Kühlung eines in der zentralen Öffnung eines Stators unter Bildung eines kreisringförmigen Rotor/Stator-Spalts rotierenden Rotors. Der Stator weist mehrere am Umfang seiner zentralen Öffnung angeordnete radialen Vertiefungen auf, welche sich in axialer Richtung mindestens teilweise über die Länge des Rotor/Stator-Spalts erstrecken und von denen eine oder mehrere mit einem Kühlmedium (z.B. Kühlluft) beaufschlagt werden. Mindestens auf der in Drehrichtung gelegenen Seite jeder mit Kühlmedium beaufschlagten Vertiefung verbleibt eine direkt neben dieser gelegene Vertiefung ohne Kühlmediumbeaufschlagung. Ist es vorgesehen, den Rotor in beiden Richtungen rotieren zu lassen, verbleiben bevorzugterweise in Umfangsrichtung gesehen auf beiden Seiten direkt neben der mit Kühlmedium beaufschlagten Vertiefung unbeaufschlagte Vertiefungen. Die Beaufschlagung mit Kühlmedium, d.h. in aller Regel die Einspeisung des Kühlmediums unter Überdruck, erfolgt derartig, dass sich jeweils eine Kühlmediumströmung im Rotor/Stator-Spalt von der mit Kühlmedium beaufschlagten radialen Vertiefung in Drehrichtung zu der direkt neben dieser angeordneten unbeaufschlagten radialen Vertiefung ausbildet. Eine Beaufschlagung ist jedoch ebenso dadurch möglich, dass in den beaufschlagten Vertiefungen ein Kühlmedium unter Umgebungsdruck zur Verfügung gestellt wird und die unbeaufschlagten Vertiefungen einem Unterdruck ausgesetzt werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Schnitt durch ein Magnetlager eines Elektromotors; und
Fig. 2 einen Schnitt entlang der Linie A-A in Fig. 1.

### Wege zur Ausführung der Erfindung

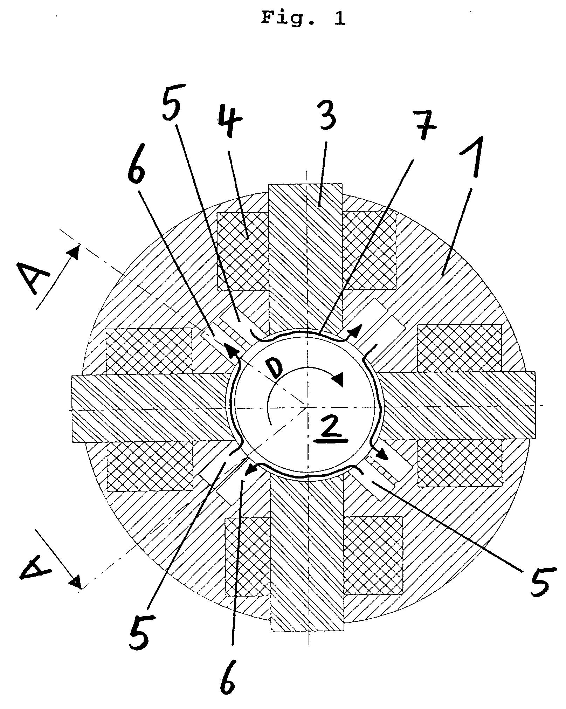

Eine bevorzugte Ausführung der Erfindung ist in Fig. 1 dargestellt. Die Zeichnung zeigt einen Schnitt durch ein luftgekühltes Magnetlager mit einem erfindungsgemässen Stator 1 und einem in einer zentralen Öffnung im Stator 1 angeordneten Rotor 2. Zwischen Stator 1 und Rotor 2 befindet sich ein kreisringförmiger Rotor/Stator-Spalt 7. Wie zu erkennen ist, umfasst der Stator 1 Lagermagneten 3 mit elektrischen Wicklungen 4 und als radiale Vertiefungen am Umfang der zentralen Öffnung des Stators 1 ausgebildete Zuführungskanäle 5 und Abführungskanäle 6 für Kühlluft, welche sich in Umfangsrichtung der zentralen Öffnung gesehen jeweils abwechseln. Hierdurch ergibt sich, dass auf beiden Seiten eines jeden Zuführungskanals 5 ein Abführungskanal 6 angeordnet ist. Die Zuführungskanäle 5 sind mit den sie flankierenden Abführungskanälen 6 ausschliesslich über den Rotor/Stator-Spalt 7 miteinander verbunden, wodurch es möglich ist, die Zuführungskanäle 5 separat von den Abführungskanälen 6 mit Kühlluft zu beaufschlagen, um eine Kühlluftströmung im Rotor/Stator-Spalt 7 in Umfangsrichtung des Spalts 7 jeweils von einem Zuführungskanal 5 zu dem in Drehrichtung D direkt neben diesem gelegenen Abführungskanal 6 zu erzeugen. Da im dargestellten Fall das Magnetlager ausschliesslich für den Betrieb in der Drehrichtung D vorgesehen ist, sind die Abstände der auf beiden Seiten vom Zuführungskanal 5 angeordneten Abführungskanäle 6 zum Zuführungskanal 5 sehr unterschiedlich, wodurch sich der für die Kühlung nicht nutzbare Umfangsanteil des Rotor/Stator Spalts 7 sehr klein halten lässt. Während der in Drehrichtung D gesehen direkt neben dem Zuführungskanal 5 angeordnete Abführungskanal 6 in Umfangsrichtung gesehen um die Umfangserstreckung des Lagermagneten 3 von diesem beabstandet ist, wird der Zuführungskanal 5 vom entgegen der Drehrichtung D gesehen direkt neben diesem angeordneten Abführungskanal 6 lediglich durch einen dünnen Steg getrennt. Aufgrund der Rotation des Rotors 2 in Drehrichtung D bildet sich bei einer Beaufschlagung der Zuführungskanals 5 mit Kühlluft eine Kühlluftströmung im Rotor/Stator-Spalt 7 von dem Zuführungskanal 5 zu dem in Drehrichtung D gelegenen Abführungskanal 6 aus. Ein nennenswertes Abströmen der Kühlluft vom Zuführungskanal 5 in den auf seiner entgegen der Drehrichtung D angeordneten Abführungskanal 6 wird durch die Pumpwirkung des Rotors 2 im wesentlichen verhindert. Bei Anordnungen, die für einen Betrieb in beiden Drehrichtungen vorgesehen sind, ist darauf zu achten, dass die Abstände jeweils vom Zuführungskanal 5 in Umfangsrichtung gesehen zu den beiden direkt neben diesem angeordneten Abführungskanälen 6 in etwa gleich gross sind und die Abführungskanäle 6 zudem in etwa das gleiche Druckniveau aufweisen. Hierdurch wird sichergestellt, dass sich bei beiden Drehrichtungen gleiche Strömungsverhältnisse im Rotor/Stator-Spalt 7 ausbilden und gleiche Kühlleistungen erzielt werden. Wenn sich in einem solchen Fall Zuführungs- 5 und Abführungskanälen 6 in Umfangsrichtung gesehen jeweils abwechseln, ist es von Vorteil, dass die Abstände zwischen allen Kanälen 5, 6 gleich gross sind. Je nach Statoraufbau kann es jedoch auch sinnvoll sein, die Zuführungs- und Abführungskanäle 5, 6 in nicht jeweils wechselnder Abfolge am Umfang der zentralen Statoröffnung zu verteilen und/oder unterschiedlich grosse Abstände zwischen diesen zu wählen. Werden beispielsweise mehrere Gruppen jeweils bestehend aus einem Zuführungskanal 5 und zwei dazugehörigen Abführungskanälen 6 am Umfang angeordnet, so liegen in Umfangsrichtung gesehen das eine Mal ein Zuführungskanal 5 und ein Abführungskanal 6 nebeneinander und das andere Mal zwei Abführungskanäle 6 nebeneinander, wobei es sinnvoll sein kann oder wobei es sich aus den Platzverhältnissen ergeben kann, dass diese jeweils unterschiedliche Abstände zueinander aufweisen. Bevorzugterweise variieren diese Abstände in Umfangsrichtung gesehen in regelmässiger Abfolge, um eine über den Umfang gesehen in etwa gleichmässige bzw. symmetrische Temperaturverteilung der an den Rotor/Stator-Spalt 7 angrenzenden Statorbauteile zu gewährleisten

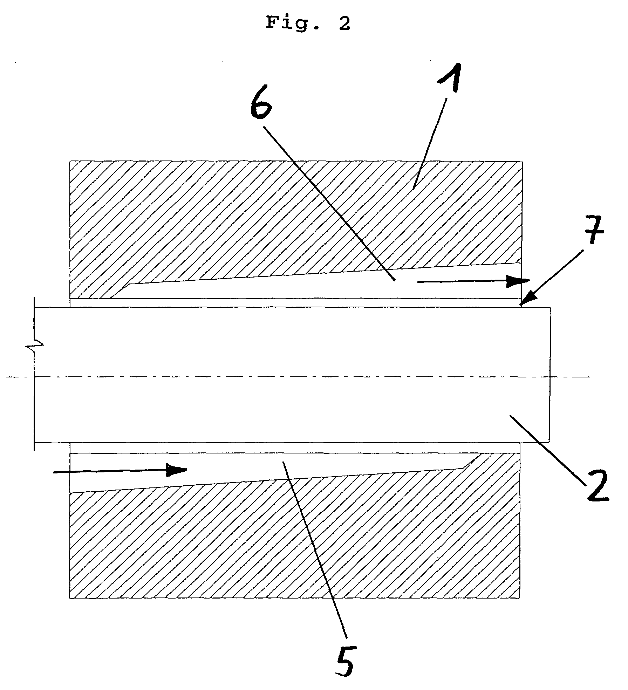

Wie aus Fig. 2 ersichtlich ist, welche einen Schnitt entlang der Linie A-A aus Fig. 1 zeigt, erstrecken sich im dargestellten Beispiel die zentrale Öffnung im Stator 1 und der in dieser angeordnete Rotor 2 in axialer Richtung vollständig durch den Stator 1 hindurch, wobei jedoch ebenso Ausführungen denkbar sind, bei denen diese Öffnung in axialer Richtung nur zu einer Seite geöffnet ist. Der Zuführungskanal 5 und der Abführungskanal 6 erstrecken sich fast über die gesamte Länge der zentralen Öffnung im Stator 1 und sind an gegenüberliegenden Enden in axialer Richtung geschlossen. Während sich der Querschnitt des Zuführungskanal 5 axial in Strömungsrichtung gesehen verkleinert, vergrössert sich der Querschnitt des Abführungskanals 6 axial in Strömungsrichtung gesehen. Hierdurch wird erreicht, dass über die axiale Erstreckung des jeweiligen Kanals 5, 6 ein im wesentlichen konstanter Totaldruck herrscht, wodurch eine über ihre gemeinsame axiale Erstreckung im Rotor/Stator-Spalt 7 gesehen im wesentlichen gleichmässige Kühlluftströmung erzielt wird. Hierdurch lassen sich über die gesamte axiale Erstreckung der Kühlluftströmung gesehen gleichmässige Bauteiltemperaturen am Rotor und Stator erreichen.

Auch wenn die Erfindung vorgängig am Beispiel eines luftgekühlten Magnetlagers eines Elektromotors erläutert wurde, so sei darauf hingewiesen, dass diese auch für alle anderen Gebiete anwendbar ist, bei denen die Kühlung in einem Rotor/Stator-Spalt 7 verbessert werden soll. Insbesondere eignet sich die Erfindung zur Verbesserung der Kühlung von Rotoren elektrischer Kraft- und/oder Arbeitsmaschinen wie z.B. Generatoren oder Elektromotoren.

### Bezugszeichenliste

- 1: Stator
- 2: Rotor
- 3: Lagermagnet
- 4: elektrische Wicklung
- 5: Zuführungskanal
- 6: Abführungskanal
- 7: Rotor/Stator-Spalt
- D: Drehrichtung

## Patentansprüche

1. Stator mit einer Achse und mit einer sich in axialer Richtung erstreckenden zentralen Öffnung zur Aufnahme eines Rotors (2) unter Bildung eines im wesentlichen kreisringförmigen Rotor/Stator-Spalts (7) und mit mehreren am Umfang der zentralen Öffnung angeordneten radialen Vertiefungen (5, 6), welche sich in axialer Richtung mindestens teilweise über die Länge der zentralen Öffnung erstrecken, **dadurch gekennzeichnet, dass** der Stator derart ausgestaltet ist, dass ein Teil oder alle dieser radialen Vertiefungen (5, 6) axiale Zu- und Abführungskanäle (5, 6) für ein Kühlmedium bilden, wobei in Umfangsrichtung gesehen auf einer oder auf beiden Seiten mindestens eines Zuführungskanals (5) ein Abführungskanal (6) direkt neben diesem angeordnet ist und dieser Zuführungskanal (5) separat von dem Abführungskanal (6) mit Kühlmedium beaufschlagbar ist zur Erzeugung einer Kühlmediumströmung im Rotor/Stator-Spalt (7) von dem Zuführungskanal (5) zu dem Abführungskanal (6).

2. Stator nach Anspruch 1, **dadurch gekennzeichnet, dass** sich in Umfangsrichtung der zentralen Öffnung gesehen Zuführungskanäle (5) und Abführungskanäle (6) jeweils abwechseln.

3. Stator nach einem der vorangehenden Ansprüche, **dadurch gekennzeichnet, dass** sich der Querschnitt eines Teils oder aller Zuführungskanäle (5) axial in Strömungsrichtung gesehen verkleinert und/oder dass sich der Querschnitt eines Teils oder aller Abführungskanäle (6) axial in Strömungsrichtung gesehen vergrössert.

4. Stator nach einem der vorangehenden Ansprüche, **dadurch gekennzeichnet, dass** ein Teil oder alle der Zuführungskanäle (5) und/oder der Abführungskanäle (6) jeweils an einem oder an beiden ihrer Enden in axialer Richtung geschlossen sind und insbesondere, dass die Zuführungskanäle (5) und die Abführungskanäle (6) jeweils an genau einem Ende in axialer Richtung geschlossen sind, wobei die geschlossenen Enden der Zuführungskanäle (5) und der Abführungskanäle (6) axial auf entgegengesetzten Seiten angeordnet sind.

5. Stator nach einem der vorangehenden Ansprüche, **dadurch gekennzeichnet, dass** der Stator (1) elektrische Statorwicklungen (4), insbesondere Statorwicklungsstäbe, aufweist.

6. Stator nach einem der vorangehenden Ansprüche, **dadurch gekennzeichnet, dass** in Umfangsrichtung gesehen die Abstände zwischen den die Zuführungs- (5) und Abführungskanäle (6) bildenden radialen Vertiefungen (5, 6) im wesentlichen gleich gross sind oder unterschiedlich gross sind, und insbesondere, dass diese Abstände in regelmässiger Folge variieren.

7. Gasgekühltes, insbesondere luftgekühltes Magnetlager mit einem Stator (1) nach einem der vorangehenden Ansprüche.

8. Gasgekühlte, insbesondere luftgekühlte elektrische Kraft- und/oder Arbeitsmaschine mit einem Stator (1) nach einem der Ansprüche 1 bis 6, und insbesondere mit Mitteln zur Beaufschlagung der Zuführungskanäle (5) mit einem gasförmigen Kühlmedium.

9. Verfahren zur Kühlung eines in der zentralen Öffnung eines Stators (1) rotierenden Rotors (2), wobei zwischen Rotor (2) und Stator (1) ein kreisringförmiger Rotor/Stator-Spalt (7) vorhanden ist und der Stator (1) mehrere am Umfang seiner zentralen Öffnung angeordnete radiale Vertiefungen (5, 6) aufweist, welche sich in axialer Richtung mindestens teilweise über die Länge des Rotor/Stator-Spalts (7) erstrecken, **dadurch gekennzeichnet, dass** eine oder mehrere der Vertiefungen (5, 6) mit einem Kühlmedium beaufschlagt werden, wobei in Umfangsrichtung gesehen mindestens auf der in Drehrichtung (D) des Rotors (2) gelegenen Seite jeder mit Kühlmedium beaufschlagten Vertiefung (5) eine direkt neben dieser gelegene unbeaufschlagte Vertiefungen (6) verbleibt und wobei die Beaufschlagung mit Kühlmedium derartig erfolgt, dass sich jeweils eine Kühlmediumströmung im Rotor/Stator-Spalt (7) von der mit Kühlmedium beaufschlagten Vertiefung (5) in Drehrichtung (D) zu der direkt neben dieser angeordneten unbeaufschlagten Vertiefung (6) ausbildet.
